Europäisches Patentamt

European Patent Office

Office européen des brevets

(19)

(11) EP 1 311 378 B1

(12) EUROPEAN PATENT SPECIFICATION

(45) Date of publication and mention
of the grant of the patent:
**26.10.2005 Bulletin 2005/43**

(21) Application number: **01958480.4**

(22) Date of filing: **24.08.2001**

(51) Int Cl.⁷: **B29C 44/34**

(86) International application number:
**PCT/JP2001/007274**

(87) International publication number:
**WO 2002/016108 (28.02.2002 Gazette 2002/09)**

(54) **METHOD OF PRODUCING COMPOSITE MATERIAL HAVING FOAMED RESIN LAYER AND SURFACE LAYER**

VERFAHREN ZUR HERSTELLUNG VON VERBUNDWERKSTOFF MIT GESCHÄUMTER SCHICHT UND OBERFLÄCHENSCHICHT

PROCEDE DE PRODUCTION D'UNE MATIERE COMPOSITE DOTEE D'UNE COUCHE DE RESINE EN MOUSSE ET D'UNE COUCHE SUPERFICIELLE

(84) Designated Contracting States:
**AT BE CH CY DE DK ES FI FR GB GR IE IT LI LU MC NL PT SE TR**

(30) Priority: **24.08.2000 JP 2000254020**

(43) Date of publication of application:
**21.05.2003 Bulletin 2003/21**

(73) Proprietor: **JSP CORPORATION Tokyo (JP)**

(72) Inventors:
• **Tezuka, Hisao c/o JSP CORPORATION YOKKAICHI PLANT Yokkaichi-shi, Mie 510-0955 (JP)**
• **Ueguri, Motoaki c/o JSP CORPORATION KANUMA PLANT Kanuma-shi, Tochigi 322-0014 (JP)**

(74) Representative: **Waldren, Robin Michael Lloyd Wise Commonwealth House, 1-19 New Oxford Street London WC1A 1LW (GB)**

(56) References cited:
**DE-A- 19 754 180**          **FR-A- 2 772 300**
**US-A- 4 206 166**          **US-A- 4 456 573**

EP 1 311 378 B1

## Description

TECHNICAL FIELD

This invention relates to a method of producing a composite material having a foamed resin layer and a surface layer laminated on the foamed resin layer and useful as a bumper, a door trim or an instrument panel of automobiles, a box, an electric device body, a pallet, etc.

BACKGROUND ART

One known method for preparing a composite material having a foamed resin layer and a surface layer laminated on the foamed resin layer includes molding expanded resin beads in a mold in which the surface layer has been previously provided (EP-A-591553, EP-A-658410 and EP-A-841155). During the molding, the expanded resin beads are heated with a heating medium and are fused and bonded to each other to form the foamed resin layer, with the surface layer being united to the foamed resin layer. The composite material obtained by this process has a problem because the bonding between expanded beads (intra-layer bonding strength) and bonding between the foamed resin layer and the surface layer (inter-layer bonding strength) are not very high, so that the composite material is susceptible to intra-layer and inter-layer delamination.

A molding method in which expanded resin beads are introduced into a space between two molds, one having perforations for introduction at a heating medium is disclosed in US-A-4206166. It is known to apply a surface finish to a molded item by provision of an appropriate interior mold surface as described in DE-A-19754180. Similar molding methods are disclosed in US-A-4456573 and FR-A-2772300.

DISCLOSURE OF THE INVENTION

In accordance with the present invention there is provided a method of producing a composite material, comprising the steps of:

(a) providing a surface layer in a first mold having an interior surface such that the surface layer is in contact with said interior surface;
(b) disposing a second mold in position such that a space is defined between said second mold and said surface layer in contact with said interior surface of said first mold, said second mold having plural groups of perforations, said second mold being connected to plural chambers corresponding in number to the number of said plural groups of perforations such that said space is in fluid communication with respective chambers through corresponding groups of perforations;
(c) feeding expanded resin beads to said space to fill said space therewith;
(d) deaerating said space, wherein step (d) comprises a first step including feeding a heating medium to said space through first one of said plural chambers while discharging the heating medium through one of said plural chambers that is different from said first chamber, and a second step of feeding the heating medium to said space through a second one of said plural chambers while discharging the heating medium though one of said plural chambers that is different from said second chamber, said first and second chambers being different from each other, and said first and second steps of step (d) being performed successively once or more times while preventing occurrence of fusion and adhesion of the expanded beads; and then
(e) introducing a heating medium into said space successively through said plural groups of perforations of said second mold to fuse and bond said expanded resin beads into a foamed resin layer with said surface layer being bonded to said foamed resin layer,

wherein step (e) comprises a first step of introducing the heating medium into said space through said first chamber while discharging the heating medium from said space through one of said plural chambers that is different from said first chamber, and a second step of introducing the heating medium into said space through said second chamber while discharging the heating medium from said space through one of said plural chambers that is different from said second chamber, said first and second steps of step (e) being performed successively once or more times.

Particular embodiments of the invention are the subject of the dependent claims.

Step (b) may be performed simultaneously with step (a), before step (a) or after step (a).

BRIEF DESCRIPTION OF THE DRAWINGS

The present invention will be described in detail below with reference to the accompanying drawings, in which

Fig. 1 is a cross-sectional, elevational view diagrammatically illustrating a molding device used for carrying out a method according to the present invention;
Fig. 2(a) is a schematic illustration showing groups of perforations formed in a second mold of the molding device of Fig. 1; and
Figs. 2(b) and 2(c) are schematic illustrations similar to Fig. 2(a) showing other examples of arrangement of grouped perforations.

DETAILED DESCRIPTION OF THE PREFERRED EMBODIMENTS

The composite material made by the method according to the present invention comprises a surface layer and a foamed resin layer laminated on the surface layer. In the present specification, that surface of the surface layer which is bonded to the foamed resin layer is referred to as "inside surface", while the opposite surface of the surface layer from the foamed resin layer is referred to as "outside surface".

The foamed resin layer is made from expanded resin beads which contain a gas such as an organic gas (e.g. a hydrocarbon gas or a halogenated hydrocarbon gas) or an inorganic gas (e.g. carbon dioxide, nitrogen or air) and which are softened or melted at an elevated temperature. Any thermoplastic resin may be used for forming the resin beads. Illustrative of suitable resins are a polycarbonate resin, a polyethylene terephthalate resin, a polyvinyl chloride resin, a polystyrene resin, an acrylic resin, an amide resin and a polyolefin resin.

For reasons of good cushioning properties and good recoverability from compression strain, the use of a polyolefin resin is preferred. Examples of polyolefin resins include low density polyethylene, medium density polyethylene, high density polyethylene, linear low density polyethylene, linear very low density polyethylene, ethylene-propylene block copolymers, ethylene-propylene random copolymers, ethylene-butene block copolymers, ethylene-butene random copolymers, ethylene vinyl acetate copolymers, ethylene-methyl methacrylate copolymers, ionomer resins obtained by inter-molecular crosslinking of ethylene methacrylic acid copolymers with metal ions, propylene homopolymer, propylene-ethylene random copolymers, propylene-butene random copolymers, propylene-ethylene block copolymers, propylene-butene block copolymers, propylene-ethylene-butene terpolymers, propylene-acrylic acid copolymers, propylene-maleic anhydride copolymers, polybutene, polypentene and copolymers of an olefinic monomer (e.g. ethylene, propylene, butene, pentene) with comonomer capable of copolymerizing with the olefinic monomer (e.g. styrene). Above all, the use of low density polyethylene, medium density polyethylene, high density polyethylene, linear low density polyethylene, linear very low density polyethylene, propylene homopolymer, propylene-ethylene copolymers, propylene-butene copolymers, propylene-ethylene-butene terpolymers is more preferred. The most preferred polyolefin resins are propylene homopolymer, propylene-ethylene random copolymers, propylene-butene random copolymers, propylene-ethylene-butene terpolymers and linear low density polyethylene.

The above polyolefin resins may be used in a non-crosslinked form or after being crosslinked with a peroxide or by radiation. For reasons of easiness of preparation and capability of recycling, the use of non-crosslinked polyolefin resins is desired.

The apparent density of the expanded resin beads is generally 0.024-0.48 $g/cm^3$, preferably 0.048-0.32 $g/cm^3$. The average particle diameter of the expanded resin beads is generally 1-7 mm, preferably 1-5 mm. The "apparent density" herein is as measured by the following method.

1000 Particles of expanded beads are sampled. The beads are dried at 60°C and a relative humidity of 15 % for 24 hours and then allowed stand in air at 23°C and a relative humidity of 50 % for another 24 hours. After measurement of their weight W (g), the beads are immersed in ethanol in a graduated measuring cylinder at 23°C to measure the true volume L ($cm^3$) of the beads from an increase of the height of the ethanol in the cylinder. The apparent density is determined by the following formula:

$$\text{Apparent density } (g/cm^3) = W/L$$

in which W and L are as defined above.

The surface layer covering over the foamed resin layer generally serves to impart a good decorative appearance and good physical, mechanical and chemical properties to the composite material. Thus, the outside surface of the surface layer may be suitably impressed with decorative pattern such as a crimp. The surface layer may be a single layer sheet or a multi-layer sheet having two or more layers, generally 2-6 layers, preferably 2-3 layers. The inside surface of the single or multi-layer sheet which is bonded to the foamed resin layer may be mechanically, physically or chemically treated by, for example, roughening or corona discharge, to improve the adhesion therebetween. The inside surface of the surface layer is desirably made of a resin capable of fuse-bonding to the expanded resin beads for reasons of improved inter-layer bonding strength between the surface layer and the foamed resin layer. The thickness of the surface layer depends upon the intended use of the composite material and is not specifically limited. Generally, however, the thickness is in the range of 0.5-10 mm.

The single layer sheet may be a fabric sheet such as a woven fabric sheet, a non-woven fabric sheet or a knitted fabric sheet; or a resin sheet such as a foamed resin sheet or a non-foamed resin sheet. Examples of the multi-layer sheets include (a) a laminate of a polyolefin elastomer layer (providing an outside surface of the surface layer) and a cross-linked polypropylene resin foam layer (providing an inside surface of the surface layer), (b) a laminate of a polyvinyl chloride layer (providing an outside surface of the surface layer) and a cross-linked polypropylene resin foam layer (providing an inside surface of the surface layer), (c) a laminate of a fiber layer (providing an outside surface of the surface layer) and a resin layer, such as a layer of a foamed resin having cushioning property (e.g. crosslinked polypropylene resin foam layer) or a non-foamed resin, (providing an inside surface of the surface layer), (d) a three layered laminate composed of a natural or synthetic leather layer (providing an outside surface of the surface layer), an intermediate, cushioning layer (e.g. a foam layer or a fiber layer) and a non-foamed resin layer having shape retentivity (providing an inside surface of the surface layer), and (e) a laminate of the above-described single layer sheet (providing an outside surface of the surface layer) and an adhesive layer (providing an inside surface of the surface layer).

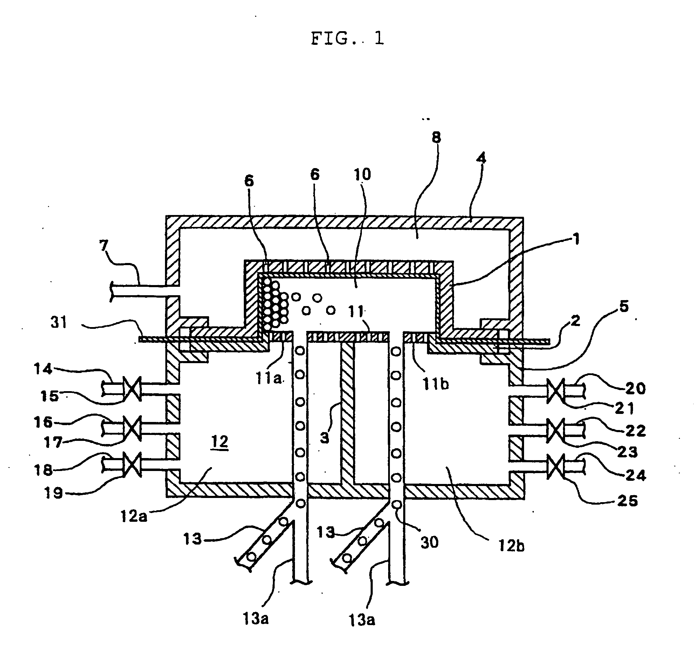

A method for preparing the composite material according to the present invention will now be described with reference to Fig. 1 which illustrates one preferred device for carrying out the method of the present invention.

The device has a pair of first and second casings 4 and 5 in which a pair of first and second molds 1 and 2 are disposed, respectively, to define first and second plenum chambers 8 and 12 therebetween, respectively. The casing 4 is moveable relative to the casing 5 so that the first and second molds 1 and 2 are positionable between open and close positions. In the close position as shown in Fig. 1, a mold cavity 10 is defined between the molds 1 and 2.

The first mold 1 has an interior surface designed to provide an outside shape of the surface layer of the composite material. The first mold 1 is provided with perforations 6 through which the mold cavity 10 is in fluid communication with the first chamber 8. The first casing 4 has a suction pipe 7 connected to an evacuation means (not shown). Thus, by operation of the evacuation means, a raw material sheet placed in the mold cavity 10 with a marginal periphery thereof being secured between the first and second molds 1 and 2 may be vacuum-molded with the first mold 1 into a surface layer 31. The evacuation means may also be used to dispose a separately shaped surface layer 31 in position such that the outside surface of the surface layer 31 is closely contacted with the interior surface of the first mold 1.

The second mold 2 is provided with a plurality of perforations 11 through which the mold cavity 10 is in fluid communication with the second chamber 12. The size and number of the perforations 11 vary depending upon the volume of the mold cavity 10 and the size of the expanded resin beads. Generally, the diameter of the perforations 11 is in the range of 0.3-1 mm.

Partition means 3 is provided in the second chamber 12 to divide the second chamber 12 into a plurality of chambers (two chambers 12a and 12b in the illustrated embodiment) and to divide the perforations 11 into plural groups of perforations (two first and second groups 11a and 11b of perforations in the illustrated embodiment) such that the mold cavity 10 is in fluid communication with respective chamber through the corresponding perforations (in the illustrated embodiment, the mold cavity 10 is in fluid communication with the chamber 12a through the first group of perforations 11a and with the chamber 12b through the second group of perforations 11b).

Designated as 13 is a feed pipe for feeding expanded resin beads 30 to the mold cavity 10. The feed pipe 13 has a branch 13a through which air is supplied to urge the beads 30 to enter the mold cavity 10. The feed pipe is provided with suitable valve means (not shown). In the illustrated embodiment, two such feed pipes 13 are used. The number of the feed pipe 13 may be reduced to one or increase to 3 or more, if desired.

To each chamber, a heating medium feed conduit, a cooling medium feed conduit and a discharge conduit are connected. Each conduit is provided with a valve. Thus, in the illustrated embodiment, the chamber 12a has a feed conduit 14 for introducing a heating medium, such as steam, thereinto through a valve 15, a feed conduit 16 for introducing a cooling medium, such as water, thereinto through a valve 17, and a discharge conduit 18 for discharging the heating medium, cooling medium or air therefrom through a valve 19. Similarly, a feed conduit 20 for introducing a heating medium into the chamber 12b through a valve 21, a feed conduit 22 for introducing a cooling medium into the second chamber 12b through a valve 23, and a discharge conduit 24 for discharging the heating medium, cooling medium or air from the second chamber 12b through a valve 25 are connected to the chamber 12b.

Using the above device, a composite material is prepared from the surface layer 31 and the expanded resin beads 30 as follows.

At the outset, the surface layer 31 is provided in the first mold 1 in contact with the interior surface thereof. The surface layer 31 may be previously shaped to fit the inside surface of the first mold 1. In this case, the shaped surface layer 31 is placed in first mold 1 and the first chamber 10 is evacuated through the suction tube 7 so that the surface layer 31 is engaged with the interior surface of the first mold 1.

Any method, such as sheet molding, slush molding or injection molding, may be used for the fabrication of the shaped surface layer 1. Examples of preferred sheet molding method include vacuum molding, compressed air molding, free drawing molding, plug and ridge molding, ridge molding, matched molding, straight molding, drape molding, reverse draw molding, air slip molding, plug assist molding, plug assist reverse draw molding and combinations thereof.

Alternatively, the surface layer 31 may be molded in situ with the first mold 1 by, for example, vacuum molding as described previously. In this case, the laminate may be heated during the molding, as desired.

After placing of the surface layer 31 in the first mold 1, or before or during the fabrication of the surface layer 31 in the first mold 1, the first mold 1 is closed with the second mold 2 such that a space (mold cavity 10) is defined between the second mold 2 and the surface layer 31 in contact with the interior surface of the first mold 1.

The expanded resin beads 30 are then fed through the pipe 13 to the space 10 while feeding air through the pipe 13a to fill the space 10 therewith. The air fed to the space 10 is discharged through the discharge pipes 18 and 24.

After completion of the feed of the expanded resin beads, the space 10 is deaerated to remove air from the interstices between the beads. The deaeration may be carried out by evacuating the space 10, by feeding a heating medium to the space 10 for substituting air in the space 10 with the heating medium, or by feeding a heating medium to the space 10 while evacuating the space.

Thus, in a first embodiment, the deaeration of the space 10 is carried out by evacuating the space 10 through at least one of the plural chambers 12a and 12b and the corresponding discharge conduit or conduits 18 and 24 each connected to a vacuum pump.

In a second embodiment, the deaeration of the space 10 is carried out by first evacuating the space 10 through first one of the plural chambers (for example, chamber 12a), and then evacuating the space 10 through second one of the plural chambers (for example, chamber 12b). By the sequential evacuation through different chambers, the air in the space 10 can be efficiently and effectively removed.

In a third embodiment, the deaeration of the space 10 is carried out by first step of feeding the heating medium to the space 10 through first one of the plural chambers (for example, the chamber 12a) while discharging the heating medium through one of the plural chambers other than the first chamber (through the chamber 12b in the illustrated case), and a second step of feeding the heating medium through second one of the plural chambers (for example, the chamber 12b) while discharging the heating medium through one of the plural chambers other than the second chamber (the chamber 12a in the illustrated case). The series of the first and second steps may be performed once or more times.

The third embodiment may be modified by using evacuation in combination with the feeding of the heating medium. Thus, in a fourth embodiment, for example, the deaeration of the space 10 is carried out by a first step including evacuating the chamber 12a and feeding the heating medium through the chamber 12b, and a second step including evacuating the chamber 12b and feeding the heating medium through the chamber 12a. The first and second steps may be performed successively once or more times. The deaeration and feeding of the heating medium may be simultaneous or in sequence.

It is preferred that steam be used as the heating medium to deaerate the space 10, for reasons of economy and effectiveness of substitution of air therewith. In addition, the use of steam is advantageous because the expanded resin beads can be preheated.

The deaeration using the heating medium should not adversely affect the efficiency of the succeeding molding step. Thus, too high a temperature of the heating medium is disadvantageous because fusion and adhesion of expanded resin beads locally occur so that, in the succeeding molding step, the heating medium is prevented from effectively flowing uniformly through interstices between the beads. Generally, the heating medium used in the deaeration step has a temperature in the range of between (Tv - 20)°C and (Tv + 10)°C, preferably between (Tv - 10)°C and (Tv + 10)°C, wherein Tv represents the Vicat softening point of the resin from which the expanded resin beads are formed. The "Vicat softening point" herein is as measured in accordance with Japanese Industrial Standard JIS K7206-1991 (using Method A for test load and a liquid heating method at a heating rate of 50°C/hour).

By the removal of air, which is a heat insulating gas, from the space 10, the succeeding molding step can effectively adhere the expanded resin beads to each other to form a foamed resin layer and bond the surface layer to the foamed resin layer.

In the molding step, a heating medium is introduced into the space 10 through plural groups of perforations successively one by one to fuse and bond the expanded resin beads 30 into a foamed resin layer with the surface layer being bonded to the foamed resin layer. Thus, with the device shown in Fig. 1, for example, the heating medium is introduced into the space 10 through the first group of perforations 11a and then through the second group of perforations 11b. The molding step is performed once or repeated two or more times. By introducing the heating medium into the space 10 while successively shifting the heating medium introducing positions, the expanded resin beads can be efficiently and uniformly heated so that the composite material obtained has not only high adhesion strength between expanded resin beads (intra-layer bonding strength) but also high bonding strength between the foamed resin layer and the surface layer (inter-layer bonding strength). Therefore, the composite material is free of intra-layer and inter-layer delamination.

The molding step preferably includes a first step of introducing the heating medium into the space 10 through a first one of the plural groups of perforations (for example, the first group of perforations 11a) while discharging the heating medium from the space 10 through one of the plural groups of perforations other than the first group of perforations (for example, through the second group of perforations 11b), and a second step of introducing the heating medium into the space 10 through a second one of the plural groups of perforations (for example, the second group of perforations 11b) while discharging the heating medium from the space 10 through one of the plural groups of perforations other than the second group of perforations (for example, the first group of perforations 11a), the first and second steps being performed successively once or more times.

The above first and second steps of the molding stage may be performed as follows. In the first step, the heating medium is introduced into first one of said chambers (for example, chamber 12a) while discharging the heating medium from the space 10 to one of the chambers that is different from the first chamber (for example to the chamber 12b), and in the second step, the heating medium is introduced into a second one of the chambers (for example, the chamber 12b) while discharging the heating medium from the space 10 to one of the chambers that is different from the second chamber (for example, to the chamber 12a).

It is desirable to initiate the feeding of the heating medium at one of the chambers which is different from the chamber which has just finished the evacuation in the preceding deaeration stage. For example, when the evacuation of the space 10 is first performed through the first chamber 12a and then through the second chamber 12b, it is preferred that the heating medium be introduced, in the molding step, to the space 10 first through the first chamber 12a and then through the second-chamber 12b. When the deaeration is performed by feeding of the heating medium, on the other hand, it is desirable to initiate the feeding of the heating medium at one of the chambers which is different from the chamber which has just finished the evacuation in the preceding deaeration stage. For example, when the deaeration of the space 10 is first performed by introducing the heating medium through the first chamber 12a and then through the second chamber 12b, it is preferred that the heating medium, in the molding step, be introduced to the space 10 first through the first chamber 12a and then through the second-chamber 12b.

If desired, the feeding of the heating medium to one of the plural chambers in the molding step may be combined with discharge of the heating medium from another chamber. For example, before or during the feeding of the heating medium to the first chamber 12a, the chamber 12b may be evacuated or connected to the atmosphere through the conduit 24 or 18.

In the heating (molding) step, the shift of the flow direction of the heating medium is preferably performed quickly (generally within 1 second) for reasons of shortening the process time and of prevention of adhesion failure. Thus, for example, after completion of the feeding of the heating medium to the space through the first group of perforations 11a, the feeding of the heating medium to the space through the second group of perforations 11b should be preferably initiated as soon as possible (within 1 second).

It is preferred that the molding step be completed by feeding the heating medium to the all chambers simultaneously so that the heating medium is introduced into the space 10 simultaneously through all of the plural groups of perforations, for reasons of improved adhesion of between expanded resin beads and between the surface layer 31 and the foamed resin layer formed from the expanded resin beads.

Generally, the heating medium used in the molding step has a temperature in the range of between $(Tv)°C$ and $(Tv + 50)°C$, preferably between $(Tv + 10)°C$ and $(Tv + 40)°C$, wherein Tv represents the Vicat softening point of the resin from which the expanded resin beads are formed. The "Vicat softening point" herein is as measured in accordance with Japanese Industrial Standard JIS K7206-1991 (using Method A for test load and a liquid heating method at a heating rate of $50°C$/hour). The molding step is generally performed for a period of 3-20 seconds, preferably 5-15 seconds. The pressure of the heating medium fed to the chambers for the formation of a foamed resin layer of the fused resin beads is generally 0.098-0.441 MPa (G), preferably 0.196-0.392 MPa (G).

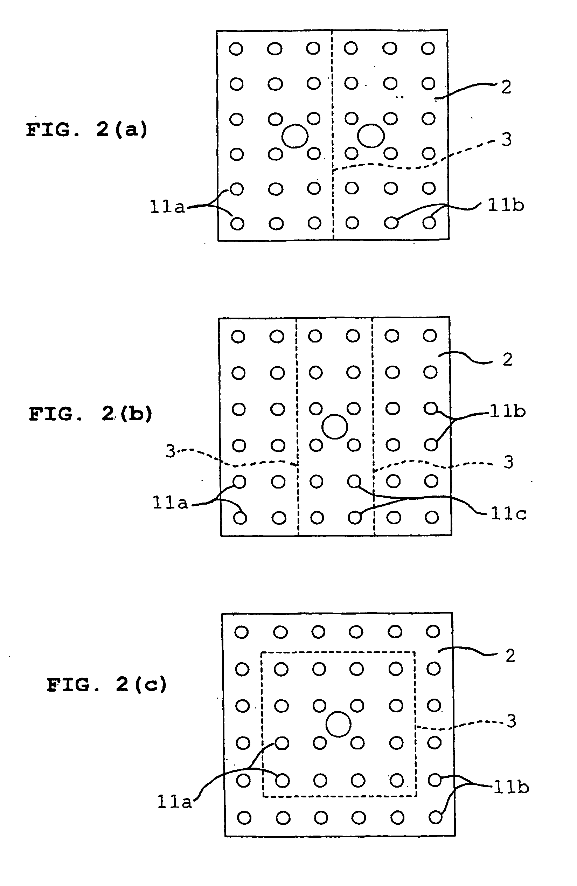

The above-described embodiments may be modified in various manners. For example, in the above embodiment shown in Fig. 1 and Fig. 2(a), the perforations are divided into two groups 11a and 11b. However, the perforations may be divided into three or more groups. In the embodiment shown in Fig. 2(b), the perforations are divided into three groups 11a, 11b and 11c. In this case, the molding step is performed by feeding the heating medium through respective groups one by one through, for example, the group 11b, then through the group 11a and then through the group 11c.

The plural groups of perforations need not be arranged in parallel. In the embodiment shown in Fig. 2(c), the perforations are divided into an inner group of perforations 11a and outer group of perforations 11b surrounding the inner group 11a. In Figs. 2(a) through 2(c), the same reference numerals designate similar component parts.

The method of the present invention may be carried out without using the above-described chambers 12a and 12b defined in a chamber 12 and divided by the partition plate 3. Rather, each of the chambers 12a and 12b may be separately and independently constructed.

In the molding step, the heating medium may be additionally fed into the mold cavity 10 through the perforations 6 via first chamber 8, if the appearance of the outer surface of the surface layer is not adversely affected.

The method of the present invention is very suited for the fabrication of a composite material in which the surface layer 31 surrounds almost entire surfaces of the foamed resin layer (except one side thereof) formed from the expanded resin beads.

In addition to the above-described advantages, the method of the present invention has a merit that the process time can be shortened, that the amount of the heating medium is relatively small and that the surface layer may be maintained in the fixed position during the deaeration and molding steps.

Since, in the method of the present invention, the heating medium is introduced through the perforations 11 of the second mold 2, the outside surface of the surface layer 31 is prevented from being directly contacted with the heating medium. Therefore, the surface layer 31 is not damaged by the heat. When, for example, the outside surface of the surface layer 31 is formed of a non-woven fabric, the composite material produced show good surface appearance free of lying down of the fibers. In the case of an outside surface of a resin sheet, there occurs no undulation. If desired, however, the heating medium can be additionally fed through the perforations 6 of the first mold 1.

The following examples will further illustrate the present invention.

Example 1

A two-layered laminate composed of a skin layer of a polyolefin elastomer having a thickness of 0.4 mm and a backing layer of a crosslinked polypropylene expanded resin sheet (Toraypef AP61 manufactured by Toray Inc.) having a thickness of 3 mm was molded to into a predetermined shape and was placed in a first mold 1 of a device as shown in Fig. 1. Expanded resin beads having an apparent density of 0.176 g/cm$^3$ (true expansion ratio: 5.1) and containing air at 0 MPa(G) were then fed to a space 10 in an amount of 65 volume % of the total volume of the space 10. The expanded resin beads had a melting point of 146°C, an average particle diameter of 4 mm and were made of a propylene-ethylene random copolymer having an ethylene content of 2.4 weight % and a Vicat softening point of 132°C. The beads in the mold cavity were deaerated and then molded as follows.

(1) First deaeration step:

Valve 15: open
Valve 17: close
Valve 19: close
Valve 21: close
Valve 23: close
Valve 25: open

While feeding steam of 0.196 MPa(G) at 132°C through the conduit 14 to the chamber 12a, the chamber 12b was evacuated to 0.049 MPa(G) for 4 seconds. The temperature in the chamber 12b was 110°C.

(2) Second deaeration step:

Valve 15: close
Valve 17: close
Valve 19: open
Valve 21: open
Valve 23: close
Valve 25: close

Then, while feeding steam of 0.196 MPa(G) at 132°C through the conduit 20 to the chamber 12b, the chamber 12a was evacuated to 0.049 MPa(G) for 4 seconds. The temperature in the chamber 12a was 110°C.

(3) First heating step:

Valve 15: open
Valve 17: close
Valve 19: close
Valve 21: close
Valve 23: close
Valve 25: close

Then, steam of 0.392 MPa(G) at 151°C was fed through the conduit 14 to the chamber 12a for 6 seconds. The temperature and pressure in the chamber 12b was 130°C and 0.196 MPa(G), respectively.

(4) Second heating step:

Valve 15: close
Valve 17: close
Valve 19: close
Valve 21: open
Valve 23: close
Valve 25: close

Then, steam of 0.392 MPa(G) at 151°C was fed through the conduit 20 to the chamber 12b for 6 seconds. The temperature and pressure in the chamber 12a was 130°C and 0.196 MPa(G), respectively.

(5) Third heating step:

Valve 15: open
Valve 17: close
Valve 19: close
Valve 21: open
Valve 23: close
Valve 25: close

Then, steam of 0.392 MPa(G) at 151°C was fed through the conduits 14 and 20 to the chambers 12a and 12b for 10 seconds.

The thus obtained molding (composite material) was cooled with water fed through the conduits 16 and 22. No gaps were found between expanded beads on a surface of the foamed resin layer of the composite material. Further, the composite material showed very high intra-layer bonding strength as well as very high inter-layer bonding strength.

Example 2

Example 1 was repeated in the same manner as described except that the third heating step was omitted. The composite material showed very high intra-layer bonding strength as well as very high inter-layer bonding strength, although gaps were observed on a part of the outer surface of the foamed resin layer.

Example 3

Example 1 was repeated in the same manner as described except that the first and second deaeration steps were conducted as follows.

(1) First deaeration step:

Valve 15: close
Valve 17: close
Valve 19: open
Valve 21: close
Valve 23: close
Valve 25: close

The chamber 12a was evacuated to -0.078 MPa(G) for 4 seconds.
(2) Second deaeration step:

Valve 15: close
Valve 17: close
Valve 19: close
Valve 21: close
Valve 23: close
Valve 25: open

Then, the chamber 12b was evacuated to -0.078 MPa(G) for 4 seconds.

No gaps were found between expanded beads on a surface of the foamed resin layer of the composite material. Further, the composite material showed high intra-layer bonding strength as well as high inter-layer bonding strength.

Example 4

Example 3 was repeated in the same manner as described except that the third heating step was omitted. The composite material showed high intra-layer bonding strength as well as high inter-layer bonding strength, although gaps were observed on a part of the outer surface of the foamed resin layer.

Comparative Example 1

Example 1 was repeated in the same manner as described except that the first and second deaeration steps and the third heating step were omitted and that only the first and second heating steps were carried out. Though no gaps were observed on the outer surface of the foamed resin layer, neither the intra-layer bonding strength nor inter-layer bonding strength was satisfactory.

Comparative Example 2

Example 1 was repeated in the same manner as described except that the first and second deaeration steps were omitted and that only the first, second and third heating steps were carried out. The resulting composite material was similar to that of the Comparative Example 1.

Comparative Example 3

Example 1 was repeated in the same manner as described except that the first and second deaeration steps were omitted, that steam at 132°C was introduced simultaneously through valves 15 and 21 while maintaining the valves 19 and 25 open and that the first and second heating steps were omitted. The resulting composite material was similar to that of the Comparative Example 1.

Comparative Example 4

Example 1 was repeated in the same manner as described except that the first and second heating steps were omitted and that only the third heating step was carried out after the first and second deaeration steps. The resulting composite material was similar to that of the Comparative Example 1.

The invention may be embodied in other specific forms without departing from the essential characteristics thereof. The present embodiments are therefore to be considered in all respects as illustrative and not restrictive, the scope of the invention being indicated by the appended claims rather than by the foregoing description.

**Claims**

1. A method of producing a composite material, comprising the steps of:

(a) providing a surface layer (31) in a first mold (1) having an interior surface such that the surface layer (31) is in contact with said interior surface;
(b) disposing a second mold (2) in position such that a space (10) is defined between said second mold and said surface layer in contact with said interior surface of said first mold (1), said second mold (2) having plural groups of perforations (11a, 11b), said second mold (2) being connected to plural chambers (12a, 12b) corresponding in number to the number of said plural groups of perforations (11a, 11b) such that said space is in fluid communication with respective chambers (12a, 12b) through corresponding groups of perforations (11a, 11b);

(c) feeding expanded resin beads (30) to said space (10) to fill said space (10) therewith;

(d) deaerating said space, wherein step (d) comprises a first step including feeding a heating medium to said space (10) through first one (12a) of said plural chambers while discharging the heating medium through one of said plural chambers (12a, 12b) that is different from said first chamber (12a), and a second step of feeding the heating medium to said space (10) through a second one (12b) of said plural chambers while discharging the heating medium through one of said plural chambers (12a, 12b) that is different from said second chamber (12b), said first and second chambers (12a, 12b) being different from each other, and said first and second steps of step (d) being performed successively once or more times while preventing occurrence of fusion and adhesion of the expanded beads (30); and then

(e) introducing a heating medium into said space successively through said plural groups of perforations (11a, 11b) of said second mold to fuse and bond said expanded resin beads (30) into a foamed resin layer with said surface layer being bonded to said foamed resin layer,

wherein step (e) comprises a first step of introducing the heating medium into said space through said first chamber (12a) while discharging the heating medium from said space through one of said plural chambers (12a, 12b) that is different from said first chamber (12a), and a second step of introducing the heating medium into said space through said second chamber (12b) while discharging the heating medium from said space through one of said plural chambers (12a, 12b) that is different from said second chamber (12b), said first and second steps of step (e) being performed successively once or more times.

**2.** A method as claimed in claim 1, wherein said first step of step (d) further comprises evacuating said one of said chambers (12a, 12b) that is different from said first chamber (12a), and said second step of step (d) further comprises evacuating said one of said chambers (12b, 12a) that is different from said second chamber(12b).

**3.** A method as claimed in any preceding claim, wherein step (e) further comprises, after said first and second steps of step (e), a third step of feeding the heating medium into said space (10) simultaneously through all of said plural chambers (12a, 12b).

**4.** A method as claimed in any preceding claim, wherein the number of said plural chambers (12a, 12b) is two.

**5.** A method as claimed in any preceding claim, wherein the heating medium is steam.

**6.** A method as claimed in any preceding claim, wherein step (a) comprises molding said surface layer (31) with said first mold (1).

**7.** A method as claimed in any preceding claim, wherein said expanded resin beads (30) are made of a polyolefin resin.

**8.** A method as claimed in any preceding claim, wherein the heating medium used in step (d) has a temperature between (Tv - 20) °C and (Tv + 10)°C, while the heating medium used in step (e) has a temperature between (Tv +10)°C and (Tv + 40)°C, where Tv is the Vicat softening point of the resin from which said expanded beads are formed.

**Patentansprüche**

**1.** Eine Methode zur Herstellung eines Verbundmaterials, enthaltend die Schritte:

(a) Bereitstellen einer Oberflächenschicht (31) in einer eine Innenoberfläche aufweisenden ersten Form (1), so dass die Oberflächenschicht (31) in Kontakt mit der Innenoberfläche ist;

(b) Anordnen einer zweiten Form (2) in einer Position, so dass ein Raum (10) gebildet wird zwischen der zweiten Form und der mit der Innenoberfläche der ersten Form (1) in Kontakt stehenden Oberflächenschicht,

wobei die zweite Form (2) eine Mehrzahl von Gruppen von Perforationen (11a, 11b) aufweist und die zweite Form (2) verbunden ist mit einer Mehrzahl von Kammern (12a, 12b), welche in ihrer Anzahl der Anzahl der Mehrzahl von Gruppen von Perforationen entspricht, so dass der Raum in Fluid-Kommunikation ist mit den jeweiligen Kammern (12a, 12b) durch übereinstimmende Gruppen von Perforationen (11a, 11b);

c) Zuführung von expandierten Harzkügelchen (30) zum Raum (10) um den Raum (10) damit zu füllen;

d) Entlüftung des Raumes, wobei Schritt (d) enthält einen ersten Schritt, zu dem die Zuführung eines Heizmediums zum Raum (10) durch eine erste (12a) der Mehrzahl von Kammern gehört während der Ableitung des Heizmediums durch eine der Mehrzahl von Kammern (12, 12b), die eine andere als die erste Kammer (12a) ist,

und einen zweiten Schritt der Zuführung des Heizmediums zum Raum (10) durch eine zweite (12b) der Mehrzahl von Kammern während der Abgabe des Heizmediums durch eine der Mehrzahl von Kammern (12a, 12b) die eine andere als die zweite Kammer (12b) ist,
wobei die ersten und die zweiten Kammern sich voneinander unterscheiden, und die ersten und zweiten Schritte von Schritt (d) sukzessiv ein- oder mehrmals durchgeführt werden während der Verhinderung des Auftretens von Verschmelzung und Anhaftung der expandierten Kügelchen (30); und dann
(e) Einführung eines Heizmediums in den Raum sukzessiv durch Mehrzahl von Gruppen von Perforationen (11a, 11b) der zweiten Form zum Schmelzen und Anhaften der expandierten Harzkügelchen (30) in eine Schaum-Harzschicht, wobei die Oberflächenschicht mit der Schaum-Harzschicht abbindet,

wobei Schritt (2) enthält einen ersten Schritt der Einleitung des Heizmediums in den Raum durch die erste Kammer (12a) während der Ableitung des Heizmediums aus dem Raum durch eine der Mehrzahl von Kammern (12a, 12b) welche eine andere ist als die erste Kammer (12a), und einen zweiten Schritt der Einführung des Heizmediums in den Raum durch die zweite Kammer (12b) während der Ableitung des Heizmediums aus dem Raum durch eine der Mehrzahl von Kammern (12a, 12b), die eine andere ist als die zweite Kammer (12b), wobei die ersten und zweiten Schritte von Schritt (e) sukzessiv ein- oder mehrmals durchgeführt werden.

2. Verfahren nach Anspruch 1,
wobei der erste Schritt von Schritt (d) weiterhin die Evakuierung einer der Kammern (12a, 12b) enthält, die eine andere ist als die erste Kammer (12a),
und ein zweiter Schritt von Schritt (d) weiterhin enthält die Evakuierung einer der Kammern (12b, 12a) die eine andere ist als die zweite Kammer (12b).

3. Verfahren nach einem der vorhergehenden Ansprüche, wobei Schritt (e) weiterhin enthält, nach den ersten und zweiten Schritten von Schritt (e), einen dritten Schritt der Zuführung des Heizmediums in den Raum (10) gleichzeitig durch alle der Mehrzahl von Kammern (12, 12b).

4. Verfahren nach einem der vorhergehenden Ansprüche, wobei die Anzahl der Mehrzahl von Kammern (12a, 12b) zwei ist.

5. Verfahren nach einem der vorhergehenden Ansprüche, wobei das Heizmedium Dampf ist.

6. Verfahren nach einem der vorhergehenden Ansprüche, wobei Schritt (a) die Formgebung der Oberflächenschicht (31) anhand der ersten Form (1) enthält.

7. Verfahren nach einem der vorhergehenden Ansprüche, wobei die expandierten Harzkügelchen (30) aus Polyolefin-Harz sind.

8. Verfahren nach einem der vorhergehenden Ansprüche, wobei das in Schritt (d) benutzte Heizmedium eine Temperatur hat zwischen (Tv - 20)°C und (Tv + 20)°C, während das in Schritt (e) benutzte Heizmedium eine Temperatur zwischen (Tv + 10)°C und (Tv + 40)°C hat, wobei Tv der Vicat-Erweichungspunkt des Harzes ist, aus dem die expandierten Harzkügelchen geformt sind.

**Revendications**

1. Procédé de production d'un matériau composite, comprenant les étapes :

(a) de dépôt d'une couche superficielle (31) dans un premier moule (1) comportant une surface intérieure, de sorte que la couche superficielle (31) est en contact avec ladite surface intérieure ;
(b) de mise d'un second moule (2) en position de sorte qu'un espace (10) est défini entre ledit second moule et ladite couche superficielle en contact avec ladite surface intérieure dudit premier moule (1), ledit second moule (2) comportant plusieurs groupes de perforations (11a, 11b), ledit second moule (2) communiquant avec plusieurs chambres (12a, 12b) en nombre correspondant au nombre desdits plusieurs groupes de perforations (11a, 11b), de sorte que ledit espace est en communication fluidique avec les chambres respectives (12a, 12b) à travers des groupes correspondants de perforations (11a, 11b) ;
(c) de délivrance de perles de résine expansées (30) dans ledit espace (10) pour qu'elles remplissent ledit espace (10) ;
(d) d'évacuation de l'air dudit espace, dans lequel l'étape (d) comprend une première étape incluant la délivrance d'un milieu chauffant dans ledit espace (10) à travers une première (12a) desdites plusieurs chambres tout en déchargeant le milieu chauffant à travers une desdites plusieurs chambres (12a, 12b) qui est différente de ladite première chambre (12a), et une seconde étape de délivrance du milieu chauffant dans ledit espace (10) à travers une seconde (12b) desdites plusieurs chambres tout en déchargeant le milieu chauffant à travers une desdites plusieurs chambres (12a, 12b) qui est différente de ladite seconde chambre (12b), lesdites première et seconde chambres (12a, 12b) étant différentes l'une de l'autre, et lesdites première et seconde étapes de l'étape (d) étant effectuées successivement une ou plusieurs fois tout en empêchant l'occurrence d'une fusion et d'une adhésion des perles expansées (30) ; et ensuite

(e) d'introduction d'un milieu chauffant dans ledit espace successivement à travers lesdits plusieurs groupes de perforations (11a, 11b) dudit second moule dans le but de faire fondre et de lier lesdites perles de résine expansées (30) en une couche de résine sous forme de mousse, ladite couche superficielle étant liée à ladite couche de résine sous forme de mousse,

dans lequel l'étape (e) comprend une première étape d'introduction du milieu chauffant dans ledit espace à travers ladite première chambre (12a) tout en déchargeant le milieu chauffant dudit espace à travers l'une desdites plusieurs chambres (12a, 12b) qui est différente de ladite première chambre (12a), et une deuxième étape d'introduction du milieu chauffant dans ledit espace à travers ladite seconde chambre (12b) tout en déchargeant le milieu chauffant dudit espace à travers l'une desdites plusieurs chambres (12a, 12b) qui est différente de ladite seconde chambre (12b), lesdites première et deuxième étapes de l'étape (e) étant effectuées successivement une ou plusieurs fois.

2. Procédé selon la revendication 1, dans lequel ladite première étape de l'étape (d) comprend en outre l'évacuation de ladite une desdites chambres (12a, 12b) qui est différente de ladite première chambre (12a), et ladite seconde étape de l'étape (d) comprend en outre l'évacuation de ladite une desdites chambres (12b, 12a) qui est différente de ladite seconde chambre (12b).

3. Procédé selon l'une quelconque des revendications précédentes, dans lequel l'étape (e) comprend en outre, à la suite desdites première et deuxième étapes de l'étape (e), une troisième étape de délivrance du milieu chauffant dans ledit espace (10) simultanément à travers toutes lesdites plusieurs chambres (12a, 12b).

4. Procédé selon l'une quelconque des revendications précédentes, dans lequel lesdites plusieurs chambres (12a, 12b) sont au nombre de deux.

5. Procédé selon l'une quelconque des revendications précédentes, dans lequel le milieu chauffant est de la vapeur.

6. Procédé selon l'une quelconque des revendications précédentes, dans lequel l'étape (a) comprend le moulage de ladite couche superficielle (31) avec ledit premier moule (1).

7. Procédé selon l'une quelconque des revendications précédentes, dans lequel lesdites perles de résine expansées (30) sont constituées d'une résine de polyoléfine.

8. Procédé selon l'une quelconque des revendications précédentes, dans lequel le milieu chauffant utilisé à l'étape (d) a une température comprise entre (Tv - 20) °C et (Tv + 10) °C, tandis que le milieu chauffant utilisé à l'étape (e) a une température comprise entre (Tv + 10) °C et (Tv + 40) °C, où Tv est le point de ramollissement Vicat de la résine à partir de laquelle lesdites perles expansées sont formées.

FIG. 1

FIG. 2(a)

FIG. 2(b)

FIG. 2(c)